# EUROPÄISCHE PATENTSCHRIFT

(11) **EP 4 014 751 B1**
(45) Veröffentlichungstag und Bekanntmachung des Hinweises auf die Patenterteilung: **28.05.2025**
(21) Anmeldenummer: 21213517.2
(22) Anmeldetag: 09.12.2021
(51) Int. Cl.: A23K 50/40, A23K 10/10, A23B 7/155, A23K 10/12, A23K 10/14, A23K 10/20, A23K 10/26, A23K 30/10, A23B 7/10, A23K 10/18, A23K 10/22, A23K 10/24

(54) **VERFAHREN ZUM HERSTELLEN VON TIERFUTTER**
METHOD FOR PRODUCING ANIMAL FEED
PROCÉDÉ DE FABRICATION D'ALIMENTS POUR ANIMAUX

(30) Priorität: 16.12.2020 DE 102020133678
(43) Veröffentlichungstag der Anmeldung: 22.06.2022
(73) Patentinhaber: Schurig, Thomas, 08529 Plauen (DE)
(72) Erfinder: Schurig, Thomas, 08529 Plauen (DE)
(74) Vertreter: Steiniger, Carmen

(56) Entgegenhaltungen:
- DE-A1- 102016 010 661
- DE-B- 1 052 787
- GB-A- 2 095 970
- US-A- 4 035 516
- US-A- 5 192 565
- US-A1- 2007 098 822
- US-A1- 2010 143 561
- MURRAY S M ET AL: "In vitro fermentation characteristics of native and processed cereal grains and potato starch using ileal chyme from dogs", JOURNAL OF ANIMAL SCIENCE, vol. 79, February 2001 (2001-02-01), pages 435 - 444, XP009506339, ISSN: 0021-8812, DOI: 10.2527/2001.792435X
- HAO YANGYI ET AL: "Rumen Fermentation, Digestive Enzyme Activity, and Bacteria Composition between Pre-Weaning and Post-Weaning Dairy Calves", ANIMALS, vol. 11, no. 9, 28 August 2021 (2021-08-28), pages 2527, XP055915882, DOI: 10.3390/ani11092527
- STIDOLPH KAITE: "The Benefits of fermented veggies for our canine friends", PET WELLNESS & NUTRITION WEBSITE, 26 January 2019 (2019-01-26), XP055876362, Retrieved from the Internet <URL:https://epoch.pet/2019/01/26/the-benefits-of-fermented-veggies-for-our-canine-friends> [retrieved on 20220105]
- SISSONS JOHN W.: "Digestive enzymes of cattle", JOURNAL OF THE SCIENCE OF FOOD AND AGRICULTURE, vol. 32, no. 2, 1 February 1981 (1981-02-01), GB, pages 105 - 114, XP093209527, ISSN: 0022-5142, DOI: 10.1002/jsfa.2740320202

## Beschreibung

Die vorliegende Erfindung betrifft ein Verfahren zum Herstellen von Tierfutter, bei dem pflanzliche Futterbestandteile in einem Fermentierprozess fermentiert werden. Die Erfindung betrifft ferner ein Verfahren zur Herstellung von Tiertrockenfutter und/oder Tierfuttersnacks.

Immer mehr Hundebesitzer orientieren sich bei der Ernährung ihres Hundes an den Fressgewohnheiten von Wölfen, von welchen unsere heutigen Haushunde abstammen. Hunde werden mit frischem Fleisch, Innereien, Knochen, Fisch, Obst und Gemüse gefüttert. Für eine bedarfsgerechte Zusammenstellung der einzelnen Nahrungskomponenten, eine ausgewogene Ernährung und eine gute Verträglichkeit der einzelnen Futterbestandteile sind jedoch ausreichend Kenntnisse in der Futtermittelkunde und Tierernährung erforderlich. Insbesondere ist beim sogenannten Barfen zu beachten, dass Hunde rohe Pflanzenbestandteile nur sehr schwer verdauen können. Es ist daher wichtig, die dem Hund verabreichten Nahrungsmittel so aufzubereiten, dass der Hund diese zum einen ohne gesundheitsschädigende Auswirkungen zu sich nehmen kann und zum anderen deren Inhaltsstoffe gut verwerten kann.

Aus dem Stand der Technik sind unterschiedliche Möglichkeiten bekannt, Tiernahrung, insbesondere Nahrung für Hunde und Katzen, verträglicher und verdaulicher zu machen.

So beschreibt die Druckschrift DE 10 2016 010 661 A1 beispielsweise ein Verfahren zur Herstellung von Alleinfutter für Haustiere, bei welchem einzelne Futterbestandteile, wie Fleisch, Innereien, Blut, Öle, Milchprodukte, Eier, Früchte, Nüsse, Muskelfleisch, Fisch und Knochen, unter Einhaltung der artgerechten Mischungsverhältnisse zerkleinert, miteinander vermischt und anschließend in einem Niedrig-Temperatur-Bereich gegart werden. Da bei diesem Herstellungsverfahren auch die Fleischbestandteile des Futters gegart werden, gehen für den Hund wesentliche Nährstoffe verloren. Gerade durch das Füttern von rohem Fleisch soll jedoch das Immunsystem des Hundes gestärkt werden.

Viele Hunde- und Katzenbesitzer verfüttern rohes, unverarbeitetes Fleisch, welchem sie zerkleinertes Gemüse, Frischkäse, Jogurt und/oder verschiedene Zusätze, wie Seealgenmehl, Lebertran oder Fischöl, zugeben. Da das Füttern von rohem Gemüse zu Verdauungsstörungen beim Tier führen kann, gehen viele Tierbesitzer dazu über, ihrem Tier neben rohem Fleisch fermentiertes Gemüse zu verabreichen.

Gemüse kann beispielsweise durch Lagern von geschnittenem Gemüse zusammen mit Wasser und Salz in einem geschlossenen Behälter fermentiert werden.

Ferner kann, wie in der Druckschrift CH 633 944 A5 beschrieben, eine Fermentierung von Grünfutter auch durch Zugabe einer Kultur eines Milchsäure erzeugenden Bakteriums ausgelöst werden.

Die Druckschrift DE 10 2012 016 262 A1 beschreibt ein Verfahren zur Herstellung eines Extraktes aus fermentiertem Pflanzenmaterial, welches in Tierfutter verwendet werden kann. Zur Herstellung des Extraktes wird entweder Pflanzenmaterial verwendet, welches im Pansen eines ruminalen Tieres fermentierte, oder Pflanzenmaterial, welches in vitro unter anaeroben Bedingungen in Gegenwart mikrobieller Starterkulturen fermentiert wurde. Der Extrakt wird durch Waschen des zumindest teilweise fermentierten Pflanzenmaterials mit einem Lösungsmittel gewonnen. Nachteilig bei diesem Verfahren ist, dass das fermentierte Pflanzenmaterial nicht direkt in dem Tierfutter verwendet wird, sondern in Form eines Extraktes, welcher zusätzliche, für das Tier unnötige Lösungsmittel aufweist. Darüber hinaus ist auch die Herstellung eines derartigen Tierfutters vergleichsweise aufwändig.

Die Druckschrift US2007/098822A1 beschreibt Futter, dem fermentierte Futterkomponenten, insbesondere fermentiertes Gras von Wiederkäuern, beigemengt wurde.

Kaite Stidolph beschreibt in ihrem Artikel "The benefits of fermented veggies for our canine friends" die Vorzüge des Fütterns von fermentiertem Gemüse an Hunde. Zugleich offenbart sie ein Rezept zur Herstellung von Sauerkraut, d.h. fermentiertem Kohl, für Hunde. Das Sauerkraut wird durch Schneiden von Kohl, Vermischen des geschnittenen Kohls mit Salz und Lagern der Mischung in einem geschlossenen Gefäß für zwei Wochen hergestellt.

Fermentierter Kohl sollte jedoch nicht über einen längeren Zeitraum an Hunde verfüttert werden, und wird in der Praxis hauptsächlich zur Durchfallerstbekämpfung eingesetzt. Fermentierter Kohl besitzt jedoch die Eigenheit, bei der Verdauung Gase freizusetzen, was wiederum zu Verdauungsstörungen führen kann.

In der Druckschrift DE 10 52 787 A ist ein Verfahren zur Herstellung eines Beifuttermittels beschrieben, welches insbesondere der Aufzucht von Kälbern dient. Das Beifuttermittel wird aus dem Panseninhalt geschlachteter Wiederkäuer gewonnen. Bei dem Verfahren werden der Panseninhalt mit einem Extraktionsmittel, wie Wasser und/oder Lösungsmittel, vermischt und anschließend die flüssigen und festen Bestandteile des Panseninhaltes voneinander getrennt. Die flüssigen Bestandteile, d.h. die Extraktionslösung, wird einer schonenden Trocknung, wie einer Vakuum-, Gefrier- oder Sprühtrocknung, unterworfen, wodurch ein pulverförmiges Beifuttermittel entsteht.

Aus dem Artikel von John W. Sissons "Digestive enzymes of cattle", J. Sci.Food Agric. 1981, 32, 105 - 114 ist entnehmbar, dass es im Rumen nicht zu einer Sekretion von Verdauungsenzymen kommt.

Die Druckschrift US 4 035 516 A befasst sich mit einem Futter für Fleischfresser, das Proteine, Kohlenhydrate, Fette, Mineralien und/oder Vitamine aufweist, sowie mit einem Verfahren zum Herstellen eines solchen Futters. Das Futter enthält zu 30 bis 70 Gew.-% Kohlenhydratquellen, wie Mais, Gerste, Weizen, Roggen, Hafer, Sojabohnen, Erbsen und Bohnen, welche mittels sporenbildender Heubakterien für etwa 20 bis 40 Minuten fermentiert werden. Vor der Fermentierung werden die Kohlenhydratquellen mit Wasser gemischt und dann vorzugsweise auf 76 bis 88°C erhitzt, um deren Kohlenhydratinhalt bzw. dessen Stärkeinhalt zu gelieren. Noch während die gelierten Kohlenhydratquellen heiß sind, werden sie mit einer weiteren Mischung aus Proteinen, Fetten, Mineralien und/oder Vitaminen vermischt. Dabei fällt die Temperatur auf 40 bis 55 °C ab, wobei diese Temperatur durch eine Wärmequelle aufrechterhalten wird. Diese warme Mischung wird dann weiter durchgeknetet, wobei sich die Heubakterien als auch die Sporen stark vermehren und die Fermentierung infolge des Verbrauchs der Hemizellulose durch die Bakterien stattfindet. In nachfolgenden Verfahrensschritten wird das Futter portioniert, getrocknet, pasteurisiert und verpackt.

Es ist daher die Aufgabe der vorliegenden Erfindung, ein effizientes Verfahren zum Herstellen eines besonders gut verdaulichen Tierfutters bereitzustellen. Ferner soll ein entsprechend effizientes Verfahren zum Herstellen besonders gut verdaulicher Tierfuttersnacks vorgeschlagen werden.

Die Aufgabe wird zum einen durch ein Verfahren zum Herstellen von Tierfutter gelöst, bei dem pflanzliche Futterbestandteile in einem Fermentierprozess fermentiert werden, wobei entweder
a) wenigstens Teile der pflanzlichen Futterbestandteile vor dem Fermentierprozess in einem Garprozess bei einer Temperatur von 72°C bis 80°C gegart werden, aus Pansen Magensaft gewonnen wird, indem grüner Pansen aufgeschnitten wird, mit Wassergespült wird und zum Abtropfen aufgehangen wird, wobei von dem Pansen abtropfender Magensaft aufgefangen wird, der Magensaft den pflanzlichen Futterbestandteilen zur Unterstützung des Fermentierprozesses der pflanzlichen Futterbestandteile zugegeben wird, und die fermentierten und zumindest teilweise gegarten pflanzlichen Futterbestandteile wenigstens mit von wenigstens einem warmblütigen Schlachttier und/oder Geflügel und/oder Fisch stammenden tierischen Futterbestandteilen unter Ausbildung einer Tierfuttergrundmasse vermischt werden, oder
b) ein Teil der pflanzlichen Futterbestandteile in einem Fermentierprozess fermentiert wird und ein weiterer Teil der pflanzlichen Futterbestandteile in einem Garprozess bei einer Temperatur zwischen 72°C und 80°C gegart wird, die fermentierten pflanzlichen Futterbestandteile und die gegarten pflanzlichen Futterbestandteile miteinander vermischt werden, aus Pansen Magensaft gewonnen wird, indem grüner Pansen aufgeschnitten wird, mit Wassergespült wird und zum Abtropfen aufgehangen wird, wobei von dem Pansen abtropfender Magensaft aufgefangen wird, der Magensaft den pflanzlichen Futterbestandteilen zugegeben wird, die miteinander vermischten pflanzlichen Futterbestandteile weiterfermentiert werden und wenigstens mit Pansen und von wenigstens einem warmblütigen Schlachttier und/oder Geflügel und/oder Fisch stammenden tierischen Futterbestandteilen unter Ausbildung einer Tierfuttergrundmasse vermischt werden.

In der ersten, oben unter a) angegebenen Ausführungsform des erfindungsgemäßen Verfahrens zum Herstellen von Tierfutter wird in einem ersten Verfahrensschritt wenigstens ein Teil der pflanzlichen Futterbestandteile in einem Garprozess bei einer Temperatur von 72°C bis 80°C, also bei einer Niedriggartemperatur, bis zum Garpunkt gegart. Das heißt, die pflanzlichen Futterbestandteile, wie beispielsweise Gemüse, werden nicht gekocht.

Unter Garen ist die Behandlung der pflanzlichen Futterbestandteile mit Wärme zu verstehen, um deren Konsistenz, Geschmack, Verdaulichkeit und/oder gesundheitliche Wirkung zu verändern. Als Garpunkt ist der Zeitpunkt zu verstehen, an welchem die pflanzlichen Futterbestandteile eine optimale Garstufe erreicht haben. Eine optimale Garstufe ist erreicht, wenn die pflanzlichen Futterbestandteile ein für ein Tier optimales Verhältnis zwischen Verdaulichkeit und enthaltenen Nährstoffen aufweisen. Das Garen bewirkt eine Lockerung der Faserstruktur und des Zellgefüges der faserigen pflanzlichen Futterbestandteile, wodurch die Verdauung erleichtert wird.

Je nach Art der pflanzlichen Futterbestandteile variiert die Garzeit, also jene Zeit, die benötigt wird, um die pflanzlichen Futterbestandteile durch Garen vom rohen in den gegarten Zustand zu überführen. Vorteilhafterweise können durch das Garen der pflanzlichen Futterbestandteile in einem Niedrig-Temperatur-Bereich von ca. 72°C bis ca. 80°C wertvolle Nährstoffe erhalten werden, wobei die pflanzlichen Futterbestandteile zugleich für Tiere, wie Hunde und Katzen, leichter verdaulich werden. Je nach Ausführungsform können entweder alle pflanzlichen Futterbestandteile des Tierfutters gegart werden oder aber lediglich ein Teil der pflanzlichen Futterbestandteile.

In einem zweiten Verfahrensschritt der ersten Ausführungsform des erfindungsgemäßen Verfahrens wird wenigstens ein Teil der pflanzlichen Futterbestandteile fermentiert.

Unter Fermentieren ist die mikrobielle oder enzymatische Umwandlung organischer Stoffe in Säure, Gase oder Alkohol zu verstehen. Die Fermentierung der gegarten pflanzlichen Futterbestandteile kann entweder auf natürlichem Wege oder durch Zugabe von Mikroorganismen, wie Bakterien, Hefe, Schimmel, Zellkulturen oder Enzyme, ausgelöst und/oder beeinflusst werden. Mit natürlicher Fermentation ist gemeint, dass die zu fermentierenden pflanzlichen Futterbestandteilen bereits natürlich eine Fermentation hervorrufende Mikroorganismen aufweisen. Im Vergleich zur natürlichen Fermentation kann durch die Zugabe von fermentationsfördernden Mikroorganismen die stattfindende Fermentation besser kontrolliert und unerwünschte Nebenprodukte können ausgeschlossen werden.

Für den Fermentierprozess kann den pflanzlichen Futterbestandteilen auch wenigstens Natriumchlorid zugegeben werden. Die Zugabe von Natriumchlorid ist insbesondere bei einer natürlichen Fermentation vorteilhaft, da dieses die fermentierenden pflanzlichen Futterbestandteile vor Fäulnis und Schimmel schützt. Bevorzugt wird den pflanzlichen Futterbestandteilen für den Fermentierungsprozess Natriumchlorid und Wasser zugegeben. Vorzugsweise werden Wasser und Natriumchlorid in einem Mischungsverhältnis von 1 zu 100 bis 3 zu 100 den pflanzlichen Futterbestandteilen zugegeben.

Durch das Fermentieren werden die pflanzlichen Futterbestandteile besser verdaulich, wobei gleichzeitig Vitamine und Mineralstoffe und weitestgehend der Nährstoffgehalt der pflanzlichen Futterbestandteile erhalten wird.

Insbesondere die gegarten und fermentierten pflanzlichen Futterbestandteile sind von Tieren besonders gut verdaulich, wobei Blähungen, Durchfall oder andere gesundheitliche Auswirkungen minimiert werden und zugleich die Natürlichkeit der pflanzlichen Futterbestandteile weitestmöglich erhalten bleibt.

Als günstig hat es sich erwiesen, wenn die pflanzlichen Futterbestandteile vor dem Garen zerkleinert werden. Es ist aber auch denkbar, die pflanzlichen Futterbestandteile im Ganzen zu garen. In letzterem Fall können die pflanzlichen Futterbestandteile vor oder nach dem Fermentierprozess zerkleinert werden. Es ist aber auch möglich, die pflanzlichen Futterbestandteile gar nicht zu zerkleinern. Insofern die pflanzlichen Futterbestandteile zerkleinert werden, kann dies manuell oder maschinell, beispielsweise mittels eines Messers, einer Schere oder durch Wolfen erfolgen.

Für die jeweilige Zerkleinerung kann ein Messerschnittverfahren und/oder ein Scherenschnittverfahren, wie beispielsweise das Wolfen, und/oder ein Homogenisierungsverfahren, in dem ein Reißen der zu zerkleinernden Futterbestandteile erfolgt, eingesetzt werden.

In einem dritten Verfahrensschritt der ersten Ausführungsform des erfindungsgemäßen Verfahrens werden die fermentierten und gegarten pflanzlichen Futterbestandteile wenigstens mit von wenigstens einem warmblütigen Schlachttier und/oder Geflügel und/oder Fisch stammenden tierischen Futterbestandteilen unter Ausbildung einer Tierfuttergrundmasse vermischt.

Als warmblütige Schlachttiere sind zur Schlachtung bestimmte Säugetiere, wie Rinder, Schweine, Schafe, Ziegen und andere Paarhufer, Pferde und andere Einhufer, Kaninchen sowie Wild, zu verstehen. Mit Geflügel sind alle Vogelarten gemeint, die als Nutztiere oder Haustiere gezüchtet werden und zum Verzehr geeignet sind.

Die tierischen Futterbestandteile werden vorzugsweise roh, also im unverarbeiteten Zustand mit den pflanzlichen Futterbestandteilen vermengt, wobei die tierischen Futterbestandteile vor dem Vermengen vorteilhafterweise zerkleinert werden. Das Zerkleinern der tierischen Futterbestandteile kann manuell oder maschinell, beispielsweise mittels eines Messers, eines Beils, einer Säge, einer Schere, eines Fleischwolfes oder eines anderen geeigneten Zerkleinerungsmittels erfolgen.

Vorteilhafterweise erfolgt die Herstellung des Tierfutters mittels des erfindungsgemäßen Verfahrens ohne eine thermische Behandlung aller Futterbestandteile, wodurch das Herstellungsverfahren sehr effizient ist und ein gesundes, gut verdauliches Tierfutter erzeugt wird, welches ohne chemische Behandlung und/oder chemische Zusätze auskommt.

In einer nicht zur Erfindung gehörenden Verfahrensvariante können die fermentierten pflanzlichen Futterbestandteile nicht gegart werden und wenigstens mit zerkleinertem grünen Pansen und weiteren von wenigstens einem warmblütigen Schlachttier und/oder Geflügel und/oder Fisch stammenden tierischen Futterbestandteilen unter Ausbildung einer Tierfuttergrundmasse vermischt werden, In dieser Verfahrensvariante werden die pflanzlichen Futterbestandteile nicht gegart, sondern nur fermentiert. Vorteilhafterweise können durch den Verzicht auf das Garen besonders viele Nährstoffe in den pflanzlichen Futterbestandteilen erhalten werden. Zugleich sind die pflanzlichen Futterbestandteile durch das Fermentieren besonders gut verdaulich. Ferner bringt der Verzicht auf das Garen eine hohe Effizienz dieser Verfahrensvariante mit sich.

Je nach Ausführungsform des Verfahrens können entweder alle pflanzlichen Futterbestandteile des Tierfutters fermentiert werden oder lediglich ein Teil der pflanzlichen Futterbestandteile. Die Fermentierung erfolgt, wie auch in der ersten Ausführungsform des erfindungsgemäßen Verfahrens, entweder auf natürliche Weise und/oder durch Zugabe von Mikroorganismen.

Die fermentierten pflanzlichen Futterbestandteile werden in einem zweiten Verfahrensschritt dieser Verfahrensvariante mit zerkleinertem grünen Pansen und weiteren von wenigstens einem warmblütigen Schlachttier und/oder Geflügel und/oder Fisch stammenden tierischen Futterbestandteilen unter Ausbildung einer Tierfuttergrundmasse vermischt.

Unter grünem Pansen ist ungewaschener bzw. nicht vollständig gewaschener Pansen, Netz-, Lab- und/oder Blättermagen zu verstehen, welcher wenigstens noch Rückstände von vorverdautem pflanzlichem Mageninhalt aufweist. Das Beimischen von grünem Pansen hat sich als besonders günstig erwiesen, da dieser durch die darin enthaltenen Rückstände bereits vorverdauter Pflanzenreste besonders gesund und gut verdaubar für Tiere ist. Grüner Pansen enthält viele wertvolle Mineralstoffe, Vitamine und probiotische Kulturen, die die Verdaubarkeit verbessern. Zugleich wird durch das Vermengen von grünem Pansen mit den pflanzlichen Futterbestandteilen die Fermentierung der pflanzlichen Futterbestandteile unterstützt, womit auch die Verdaubarkeit der pflanzlichen Futterbestandteile verbessert wird.

Vor dem Vermengen des grünen Pansens mit den pflanzlichen Futterbestandteilen und weiteren tierischen Futterbestandteilen, werden vorzugsweise der Pansen und die weiteren tierischen Futterbestandteile zerkleinert.

In einer weiteren, unter b) angegebenen Ausführungsform des erfindungsgemäßen Verfahrens wird ein Teil der pflanzlichen Futterbestandteile in einem Fermentierprozess fermentiert und ein weiterer Teil der pflanzlichen Futterbestandteile in einem Garprozess bei einer Temperatur zwischen 72°C und 80°C gegart, die fermentierten pflanzlichen Futterbestandteile und die gegarten pflanzlichen Futterbestandteile werden miteinander vermischt, die miteinander vermischten pflanzlichen Futterbestandteile werden weiterfermentiert und wenigstens mit Pansen und von wenigstens einem warmblütigen Schlachttier und/oder Geflügel und/oder Fisch stammenden tierischen Futterbestandteilen unter Ausbildung einer Tierfuttergrundmasse vermischt.

Durch das Vermischen der gegarten pflanzlichen Futterbestandteilen mit den fermentierten pflanzlichen Futterbestandteilen kann sichergestellt werden, dass sämtliche pflanzliche Futterbestandteile fermentiert werden, wodurch das ausgebildete Tierfutter besonders gut verträglich ist und sich insbesondere zur Fütterung von hypoallergenen Tieren eignet.

Der Fermentierprozess wird zusätzlich durch die Zugabe von Pansen zu den pflanzlichen Futterbestandteilen positiv beeinflusst. Die in dem Pansen enthaltenen Milchsäurebakterien führen zu einer Fortführung des Fermentierprozesses. Zugleich kann der Fermentierprozess durch das Zusätzen der in dem Pansen enthaltenen Milchsäurebakterien besser kontrolliert werden, wobei unerwünschte Nebenprodukte ausgeschlossen werden können.

In einer weiteren nicht zur Erfindung gehörenden Verfahrensvariante wird grüner Pansen aufgeschnitten, mit Wasser gespült und zum Abtropfen aufgehangen, wobei von dem Pansen abtropfender Magensaft aufgefangen wird, der abgetropfte Pansen zerkleinert wird und mit pflanzlichen Futterbestandteilen und mit von wenigstens einem warmblütigen Schlachttier und/oder Geflügel und/oder Fisch stammenden tierischen Futterbestandteilen unter Ausbildung einer Tierfuttergrundmasse vermischt wird, die ausgebildete Tierfuttergrundmasse wird fermentiert, wobei mehrfach gewonnener Magensaft zugegeben wird.

Die zugegebenen pflanzlichen Futterbestandteile sind vorzugsweise roh, d.h. ungegart und unfermentiert. Alternativ können jedoch auch im Niedrigtemperaturbereich gegarte und/oder fermentierte pflanzliche Futterbestandteile mit dem Pansen und den weiteren tierischen Futterbestandteilen zur Ausbildung der Tierfuttergrundmasse vermischt werden.

Durch das Vermischen der pflanzlichen Futterbestandteile mit Pansen wird der Fermentierprozess in Gang gesetzt. Insbesondere die in dem Pansen enthaltenen Milchsäurebakterien führen zur Fermentierung der pflanzlichen Futterbestandteile.

Durch die zusätzliche kontinuierliche Zugabe von Magensaft zu den pflanzlichen Futterbestandteilen kann der Fermentierprozess beschleunigt werden und gleichzeitig ein gutes Fermentierergebnis erzielt werden. Es kann so sehr effektiv ein sehr gut verträgliches Tierfutter hergestellt werden.

In allen Ausführungsformen des erfindungsgemäßen Verfahrens kann das Vermischen der einzelnen Futterbestandteile entweder manuell oder maschinell, beispielsweise mittels Zwangsmischverfahren, Rührmischverfahren oder Mengmischverfahren, erfolgen.

In den erfindungsgemäßen Verfahrensvarianten wird aus Pansen Magensaft gewonnenen wird, welcher den pflanzlichen Futterbestandteilen zugegeben wird. Unter Magensaft ist eine im Magen abgesonderte, eine Verdauung bewirkende Flüssigkeit zu verstehen. Magensaft enthält wichtige Enzyme, welche den Fermentierungsprozess der pflanzlichen Futterbestandteile unterstützen.

Hinsichtlich der ersten Ausführungsform des erfindungsgemäßen Verfahrens, in welcher wenigstens ein Teil der pflanzlichen Futterbestandteile gegart wird, hat es sich als vorteilhaft erwiesen, wenn die pflanzlichen Futterbestandteile vor dem Garprozess zerkleinert werden, und nach dem Zerkleinerungsprozess und vor dem Garprozess flüssige und feste pflanzliche Futterbestandteile voneinander getrennt werden. Das Trennen der festen und flüssigen pflanzlichen Futterbestandteile kann durch Absieben, Zentrifugieren und/oder Pressen erfolgen.

Vorteilhafterweise werden in dem Garprozess nur die festen pflanzlichen Futterbestandteile gegart. Hierbei werden die leichter verdaulichen flüssigen pflanzlichen Futterbestandteile ungegart weiterverarbeitet, wodurch darin enthaltene, wichtige Nährstoffe erhalten bleiben und ein Tierfutter mit vergleichsweise hohem Nährstoffgehalt hergestellt werden kann.

Als besonders günstig hat es sich auch herausgestellt, wenn die gegarten festen pflanzlichen Futterbestandteile und die nicht gegarten flüssigen pflanzlichen Futterbestandteile bei einer Temperatur in einem Bereich von ca. 30°C bis 38°C miteinander vermischt werden. In diesem Temperaturbereich beginnt eine Milchsäuregärung, bei welcher unter anderem Milchsäurebakterien entstehen, welche für die Fermentierung der pflanzlichen Futterbestandteile genutzt werden.

Ferner können in einer Ausführungsform des erfindungsgemäßen Verfahrens den pflanzlichen Futterbestandteilen Milchsäurebakterien und/oder Bierhefe zugegeben werden, wodurch der Fermentierungsprozess der pflanzlichen Futterbestandteile positiv beeinflusst werden kann. Darüber hinaus können den pflanzlichen Futterbestandteilen zur Beeinflussung des Fermentierungsprozesses auch andere Bakterien und/oder Enzyme zugegeben werden.

Hinsichtlich der Fermentierung der pflanzlichen Futterbestandteile hat es sich auch als günstig erwiesen, wenn der Fermentierprozess in einem geschlossenen Behälter durchgeführt wird. Hierzu kann beispielsweise ein verschließbares Gefäß oder ein verschließbarer Beutel verwendet werden. Die Fermentierung der pflanzlichen Futterbestandteile erfolgt vorteilhafterweise in sauerstoffarmer Umgebung, da die Milchsäurebakterien bei der Fermentierung entstehen, wenn Zucker unter Ausschluss von Sauerstoff verstoffwechselt wird. Zudem verhindert der Ausschluss von Sauerstoff das Verfaulen der pflanzlichen Futterbestandteile.

Diesbezüglich hat es sich als besonders vorteilhaft herausgestellt, wenn der Fermentierprozess im Vakuum durchgeführt wird.

Bei dem erfindungsgemäßen Verfahren können als pflanzliche Futterbestandteile Gemüse, Früchte, Getreideprodukte und/oder Salat verwendet werden.

Als Früchte können Obst, Nüsse und essbare Samenkerne verwendet werden. Als Salat können unterschiedliche Salatarten, wie Feldsalat, Rucolasalat, Eisbergsalat, Romanasalta, Chicoree, aber auch Gräser zum Einsatz kommen. Als Getreideprodukte können beispielsweise Haferflocken oder Getreidemehle eingesetzt. Als Gemüse empfiehlt sich die Verwendung von Wurzelgemüse. Genauso können aber auch andere Gemüsesorten, wie beispielsweise Fruchtgemüse oder Blütengemüse, verwendet werden.

Günstigerweise werden als von wenigstens einem warmblütigen Schlachttier stammende tierische Futterbestandteile Muskelfleisch, Fett, Knochen, Innereien, Blut, Haut, Flechsen und/oder Gelatine verwendet.

Durch Vermischen wenigstens der pflanzlichen Futterbestandteile mit den tierischen Futterbestandteilen wird eine Tierfuttergrundmasse ausgebildet, welcher für eine besonders vielfältige und ausgewogene Ernährung Öl, Milchprodukte und/oder Eier beigemischt werden.

Insbesondere die Verwendung von Fischöl hat sich als besonders vorteilhaft herausgestellt. Ebenso können aber auch andere Öle, wie Leinöl, Sonnenblumenöl oder Kokosöl, verwendet werden.

Als Milchprodukte können der Tierfuttergrundmasse beispielsweise Käse, Frischkäse, Jogurt oder entsprechende Pulver zugegeben werden.

Besonders bevorzugt ist das erfindungsgemäß hergestellte Tierfutter ein Alleinfuttermittel für Hunde. Es enthält somit alle Nahrungsbestandteile, die ein Hund braucht, um sich allein von diesem Tierfutter ernähren zu können. Etwaige Nahrungsergänzungsstoffe müssen dem Hund also nicht verabreicht werden.

Die fertige Tierfuttergrundmasse kann vorteilhafterweise in einem Naturdarm verpackt werden. Durch das Verpacken in dem Naturdarm kann das Tierfutter gut gelagert werden. Gleichzeitig kann das Tierfutter samt dem Naturdarm, also ohne dieses vorher aus dem Naturdarm entnehmen zu müssen, von dem Tier verzehrt werden. Das Tierfutter ist dadurch besonders einfach und schnell verabreichbar. Alternativ kann das Tierfutter auch in einem Kunstdarm, einem Behältnis oder einem Beutel aus Kunststoff verpackt werden. Auch ist es möglich, dass die Tierfuttergrundmasse, ohne diese vorher zu verpacken, direkt nach dessen Herstellung dem Tier verfüttert wird.

Zur Verlängerung der Haltbarkeit des Tierfutters kann die abgepackte Tierfuttergrundmasse gebrüht, gekocht, gedämpft, pasteurisiert, geräuchert, getrocknet und/oder eingefroren werden.

Die vorliegende Erfindung betrifft ferner ein Verfahren zum Herstellen von Tiertrockenfutter und/oder Tierfuttersnacks unter Verwendung einer Ausführungsform des erfindungsgemäßen Verfahrens zur Herstellung von Tierfutter, wobei die Tierfuttergrundmasse wenigstens mit Getreideflocken zu einer Tierfuttermasse vermischt wird, die gebacken und/oder getrocknet wird.

Vorteilhafterweise kann/können durch dieses Verfahren rein natürliche(s) Tiertrockenfutter und/oder Tierfuttersnacks hergestellt werden, welche keine Konservierungsstoffe, kein Salz, keine Geschmacksverstärker oder Lockstoffe, wie beispielsweise Glutamat, aufweisen.

Zur Herstellung des Tiertrockenfutters und/oder der Tierfuttersnacks wird die Tierfuttergrundmasse, welche wenigstens fermentierte pflanzliche Futterbestandteile und tierische Futterbestandteile aufweist, mit Getreideflocken vermischt. Die daraus erzeugte Tierfuttermasse wird vorzugsweise bei einer Temperatur zwischen 160°C und 200°C für ca. eine Stunde gebacken. Alternativ kann die Tierfuttermasse aber auch in einem Dörrautomat oder in anderer geeigneter Weise getrocknet werden. Ebenso kann auch der Temperaturbereich beim Backen der Tierfuttermasse und/oder die Backzeit variieren. Beispielsweise kann die Tierfuttermasse auch bei höheren Temperaturen und/oder einer kürzeren Zeit gebacken werden.

Zum Herstellen kleiner, handlicher Tierfuttersnacks kann die Tierfuttermasse vor dem Backen bzw. Trocknen portioniert und/oder geformt werden. So kann die Tierfuttermasse beispielsweise in 5 g oder 10 g große Portionen aufgeteilt werden, welche beispielsweise zu kleinen Kugeln geformt werden. Ferner kann die Tierfuttermasse aber auch ausgerollt werden und beispielsweise mittels Keksformen ausgestochen werden und/oder mittels eines Messers unter Ausbildung von Rechtecken, Dreiecken oder anderer Formen zerschnitten werden.

Als Getreideflocken werden vorteilhafterweise Haferflocken verwendet. Alternativ können aber auch Dinkelflocken, Gersteflocken, Hirseflocken und/oder andere aus Getreide hergestellte Flocken verwendet werden. Durch das Beimengen von Getreideflocken zur Tierfuttergrundmasse verbleibt das Tiertrockenfutter bzw. verbleiben die Tierfuttersnacks länger im Magen des Tieres, wodurch mehr Zeit bleibt, um die Nahrung aufzuschließen. Dadurch ist das hergestellte Tiertrockenfutter bzw. sind die hergestellten Tierfuttersnacks besonders bekömmlich und gesund. Zudem binden die Getreideflocken die einzelnen Futterbestandteile der Tierfuttermasse, wodurch diese gut zu verarbeiten ist.

Bevorzugt werden zur Herstellung der Tierfuttermasse 40 bis 50 Gew.% tierische Futterbestandteile, 20 bis 30 Gew.% pflanzliche Futterbestandteile und 30 bis 35 Gew.% Getreideflocken verwendet. Ebenso kann die Tierfuttermasse aber auch eine andere Zusammensetzung aufweisen.

Bevorzugte Ausführungsformen der vorliegenden Erfindung werden im Folgenden anhand von Figuren näher erläutert, wobei
- Figur 1: schematisch Verfahrensschritte eines Verfahrens zum Herstellen von Tierfutter zeigt;
- Figur 2: schematisch Verfahrensschritte eines Verfahrens zum Herstellen von Tierfutter zeigt;
- Figur 3: schematisch Verfahrensschritte einer weiteren Ausführungsform eines Verfahrens zum Herstellen von Tierfutter zeigt;
- Figur 4: schematisch Verfahrensschritte einer weiteren Ausführungsform eines Verfahrens zum Herstellen von Tierfutter zeigt, und
- Figur 5: schematisch Verfahrensschritte einer weiteren Ausführungsform eines Verfahrens zum Herstellen von Tierfutter zeigt.

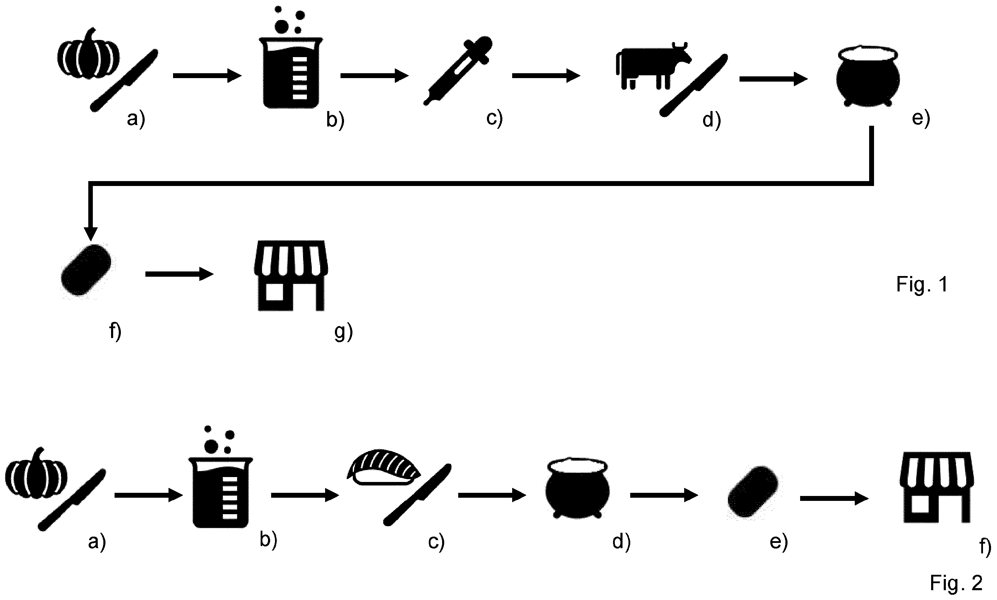

Figur 1 zeigt Verfahrensschritte eines Verfahrens zum Herstellen von Tierfutter, wobei in Verfahrensschritt a) die pflanzlichen Futterbestandteile, wie Gemüse, Obst und Salat, mit einem Fleischwolf zerkleinert werden. In dem gezeigten Ausführungsbeispiel werden die pflanzlichen Futterbestandteile auf eine Größe von 10 mm zerkleinert. Ferner können die pflanzlichen Futterbestandteile aber auch kleiner oder größer als 10 mm ausgebildet werden. Beispielsweise können die pflanzlichen Futterbestandteile nach dem Zerkleinern eine Größe von 5 mm, 15 mm oder 20 mm aufweisen.

Wie oben ausgeführt, können die Futterbestandteile mit einem Messerschnittverfahren, einem Scherenschnittverfahren, wie dem Wolfen, und/oder einem Homogenisierungsverfahren zerkleinert werden. Die pflanzlichen Futterbestandteile können beispielsweise mit einem Fleischwolf, mit einem Messer, einer Schere, einem Beil, einem Mixer oder einem anderen geeigneten Zerkleinerungsmittel zerstückelt werden.

In dem nachfolgenden Verfahrensschritt b) werden die zerkleinerten pflanzlichen Futterbestandteile in einem Garprozess bei einer Temperatur zwischen ca. 72°C und 80°C gegart. Die in dem Garprozess verwendete Temperatur kann auch leicht unter 72°C oder über 80°C liegen. Für einen Erhalt von möglichst vielen Nährstoffen in den pflanzlichen Futterbestandteilen ist es aber von Vorteil, wenn die pflanzlichen Futterbestandteile genau in dem angegebenen Niedrig-Temperatur-Bereich gegart werden.

Die pflanzlichen Futterbestandteile werden bis zum Erreichen des Garpunktes gegart. Der Garpunkt ist erreicht, wenn ein optimales Verhältnis zwischen der Konsistenz der pflanzlichen Futterbestandteile, dem Nährstoffgehalt und der Verdaulichkeit vorliegt. Die Garzeit, also jene Zeit, die benötigt wird, bis der Garpunkt erreicht ist, ist abhängig von der Art der verwendeten pflanzlichen Futterbestandteile. Beispielsweise ist die Garzeit von festem Gemüse, wie Karotten, höher als die Garzeit von weicherem Gemüse, wie Zucchini. Bei Verwendung verschiedener pflanzlicher Futterbestandteile mit unterschiedlichen Garzeitenwerden nicht alle pflanzlichen Futterbestandteile in einem gemeinsamen Behältnis gegart bzw. die einzelnen pflanzlichen Futterbestandteile entsprechend ihrer Garzeit dem Garprozess nacheinander zugeführt. Damit wird sichergestellt, dass alle der verwendeten pflanzlichen Futterbestandteile bis zum optimalen Garpunkt gegart werden.

Im Verfahrensschritt c) werden die gegarten und auf ca. 30°C bis 38°C abgekühlten pflanzlichen Futterbestandteile in einen luftdichten Behälter abgefüllt und mit MilchsäureBakterien versetzt, wodurch die pflanzlichen Futterbestandteile fermentieren.

Im Verfahrensschritt d) werden die tierischen Futterbestandteile, im vorliegenden Beispiel Muskelfleisch, Blut, Knochen, Haut, Gelatine und Flechsen, Eier, Milchprodukte und Fisch, sowie Nüsse in einem Fleischwolf auf 10 mm zerkleinert. Ebenso können diese Futterbestandteile aber auch mit einem Messer, einer Schere, einem Mixer oder ähnlichem zerstückelt werden. Auch können diese Futterbestandteile auf eine andere Größe, beispielsweise 5 mm oder 15 mm gebracht werden.

Anschließend werden im Verfahrensschritt e) die im Verfahrensschritt d) zerkleinerten Futterbestandteile mit den in Verfahrensschritt c) fermentierten pflanzlichen Futterbestandteilen in artgerechter Zusammensetzung vermischt.

Eine artgerechte Zusammensatzung der Futterbestandteile des Tierfutters orientiert sich an den Fressgewohnheiten der entsprechenden Wildtiere, als beispielsweise von Wölfen oder Wildkatzen. In diesem Ausführungsbeispiel werden die einzelnen Futterbestandteile derart miteinander vermischt, dass das hergestellte Tierfutter ca. 30 % pflanzliche Futtermittelbestandteile, Häute, Gelatine, Flechsen, Innereien, Blut, Eier, Milchprodukte, Nüsse und Fisch aufweist und ca. 70 % Muskelfleisch warmblütiger Schlachttiere und fleischige Knochen. Muskelfleisch und fleischige Knochen werden vorzugsweise in einem Verhältnis von ca. 1:1 beigefügt.

In der vorliegenden Ausführungsform des erfindungsgemäßen Verfahrens stammen die tierischen Futterbestandteile von einem Rind. Alternativ können die tierischen Futterbestandteile aber auch von einem Pferd, einem Schaf, einer Ziege, einem Reh oder einem anderen warmblütigen Schlachttier stammen.

Das Vermengen der einzelnen Futterbestandteile zu einer Tierfuttergrundmasse erfolgt vorliegend mittels einer Mengmaschine. Ebenso kann das Vermischen der Futterbestandteile aber auch manuell oder mittels einer anderen geeigneten Maschine vorgenommen werden.

In dem vorliegenden Ausführungsbeispiel sind alle pflanzlichen Futterbestandteile gegart und fermentiert. Es ist aber auch denkbar, dass lediglich ein Teil der pflanzlichen Futterbestandteile gegart und/oder fermentiert wird, sodass die hergestellte Tierfuttergrundmasse neben gegarten und fermentierten pflanzlichen Futterbestandteilen auch ungegarte und/oder unfermentierte pflanzliche Futterbestandteile aufweist.

Im sich anschließenden Verfahrensschritt f) wird die hergestellte Tierfuttergrundmasse portioniert und verpackt. In dem gezeigten Ausführungsbeispiel wird die Tierfuttergrundmasse mit einer Vakuum-Füllmaschine in einen Kunstdarm gefüllt und portioniert. Der Verschluss des mit Tierfuttergrundmasse befüllten Kunstdarms erfolgt mittels einer Doppelclipmaschine. Alternativ kann das Verschließen des Kunstdarms aber auch anders erfolgen, beispielsweise manuell mittels eines Gummis, Drahtes oder Bandes.

Ersatzweise kann die Tierfuttergrundmasse auch in einen Naturdarm, einer Dose, einem Beutel oder einem anderen Behältnis verpackt werden und/oder mittels einer oder mehrerer anderer zum Portionieren und Verpacken geeigneter Maschinen abgefüllt werden. Auch kann die Tierfuttergrundmasse per Hand beispielsweise unter Zuhilfenahme einer Waage portioniert und verpackt werden.

In einem letzten Verfahrensschritt g) wird das verpackte Tierfutter eingefroren, um dessen Haltbarkeit zu verlängern.

Prinzipiell kann das verpackte Tierfutter auch durch Wärmeeinwirkung, beispielsweise durch Räuchern, Kochen, Dämpfen, Brühen, Pasteurisieren, oder durch Trocknen haltbar gemacht werden.

In alternativen Ausführungsformen können die Verfahrensschritte f) und/oder g) auch weggelassen werden. So kann das Tierfutter direkt nach dem Vermischen der einzelnen Futterbestandteile dem Tier verfüttert werden, ohne dieses vorher zu verpacken. Auch kann das Tierfutter dem Tier verfüttert werden, ohne dieses dem zusätzlichen Verfahrensschritt der Haltbarmachung zu unterziehen.

Figur 2 zeigt schematisch Verfahrensschritte eines Verfahrens zum Herstellen von Tierfutter, bei welchem im Verfahrensschritt a) die pflanzlichen Futterbestandteile auf eine Größe von 5 mm zerkleinert werden. Wie oben zu Figur 1 beschrieben, kann das Zerkleinern der pflanzlichen Futterbestandteile auf unterschiedliche Weise erfolgen. Ebenso können die pflanzlichen Futterbestandteile auch auf eine andere Größe gebracht werden.

In einem zweiten Verfahrensschritt b) werden die zerkleinerten pflanzlichen Futterbestandteile zur Fermentierung in einen luftdicht verschließbaren Vakuumbeutel gegeben. Hierbei erfolgt der Fermentierungsprozess auf natürliche Weise, d. h. die Fermentierung wird durch die sich natürlich auf den pflanzlichen Futterbestandteilen befindlichen Mikroorganismen hervorgerufen. Es ist jedoch auch möglich, den Fermentierungsprozess durch Zugabe von Mikroorganismen, wie Bakterien, Hefe, Schimmel, Zellkulturen und/oder Enzymen, zu beeinflussen.

Im nachfolgenden Verfahrensschritt c) wird grüner Pansen von einem Wiederkäuer, beispielsweise einem Rind, einem Schaf, einer Ziege oder einem Reh, mittels eines Fleischwolfs auf eine Größe von 5 mm zerkleinert.

Der zerkleinerte grüne Pansen wird im Verfahrensschritt d) mit den fermentierten pflanzlichen Futterbestandteilen zu einer Tierfuttergrundmasse vermischt. Dies erfolgt vorliegend per Hand, kann, wie unter der Beschreibung zu Figur 1 ausgeführt, aber auch mit einer Mengmaschine oder einer anderen geeigneten Maschine erfolgen.

Im Verfahrensschritt e) wird die Tierfuttergrundmasse mittels einer Vakuumfüllmaschine in Naturdarm verpackt. Vorzugsweise wird die Tierfuttergrundmasse derart verpackt, dass Portionen von 500 g entstehen. Es können aber auch Portionen mit 250 g, 800 g, 1 kg, 1,5 kg oder einem anderen gängigen Gewicht hergestellt werden. Ferner kann das Tierfutter auch in Kunstdarm oder ein anderes Behältnis eingebracht und/oder mittels einer anderen Maschine oder manuell abgefüllt werden.

Zum Abfüllen des hergestellten Tierfutters kann eine Portionieranlage mit oder ohne Vakuum und/oder eine Kolbenfüllmaschine eingesetzt werden.

Das in Naturdarm abgepackte Tierfutter wird in Verfahrensschritt f) unter Zuhilfenahme eines handelsüblichen Rauchspießes in einer Trockenkammer oder an der freien Luft solange getrocknet, bis das Tierfutter einer Restfeuchte von ca. 30% aufweist. Unter Restfeuchte ist hier der ungebundene Wassergehalt in dem Tierfutter zu verstehen. In weiteren Ausführungsformen des erfindungsgemäßen Verfahrens kann das verpackte Tierfutter auch kürzer oder länger getrocknet werden, sodass dieses eine andere Restfeuchte aufweist. Auch ist es möglich, dass das verpackte Tierfutter nicht zum Trocknen abgehängt wird, sondern dieses, wie hinsichtlich Figur 1 beschrieben, durch Wärmeeinwirkung oder Einfrieren behandelt wird.

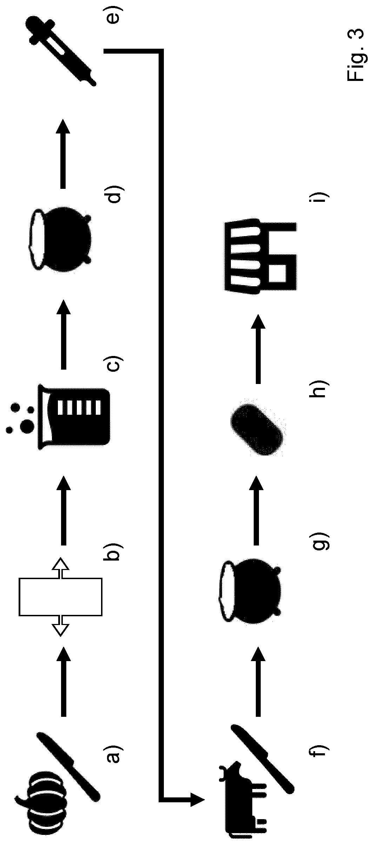

Figur 3 zeigt schematisch Verfahrensschritte einer weiteren Verfahrensvariante zum Herstellen von Tierfutter.

In dem in Figur 3 dargestellten Ausführungsbeispiel werden in einem ersten Verfahrensschritt a) pflanzliche Futterbestandteile, wie Obst, Gemüse und Salat mit einem Gemüseschneider zu Gemüsestreifen verarbeitet. Ebenso können die pflanzlichen Futterbestandteile aber auch in Würfel geschnitten werden oder in eine andere Form gebracht werden und/oder auf andere Art und Weise, beispielsweise mittels eines Messers, zerkleinert werden.

Anschließend werden im Verfahrensschritt b) feste pflanzliche Futterbestandteile und flüssige pflanzliche Futterbestandteile voneinander getrennt. Dies kann beispielsweise durch Absieben, Zentrifugieren und/oder Pressen erfolgen.

Im Verfahrensschritt c) werden dann ausschließlich die festen pflanzlichen Futterbestandteile bei einer Temperatur zwischen ca. 72°C und 80 °C bis zur Erreichung des Garpunktes gegart. Die Temperatur zum Garen ist nicht auf den vorgenannten Temperaturbereich festgelegt, sondern kann auch höher oder tiefer sein. Für ein besonders gesundes und gut verdauliches Tierfutter werden die pflanzlichen Futterbestandteile jedoch optimalerweise im Niedrig-Temperatur-Bereich verarbeitet.

Nach dem Garen der festen pflanzlichen Futterbestandteile und deren Abkühlen auf eine Temperatur zwischen ca. 30 °C und 38°C, werden die gegarten festen pflanzlichen Futterbestandteile mit den ungegarten flüssigen pflanzlichen Futterbestandteilen vermischt (Verfahrensschritt d)).

Die vermischten pflanzlichen Futterbestandteile werden im Verfahrensschritt e) zum Fermentieren in einen Behälter abgefüllt. In diesem Ausführungsbeispiel erfolgt die Fermentierung auf natürliche Weise. Ebenso können den pflanzlichen Futterbestandteile im Fermentierungsprozess aber auch Mikroorganismen, wie Bakterien, Hefe, Schimmel, Zellkulturen und/oder Enzyme, zugegeben werden.

Im Verfahrensschritt f) werden Teile der tierischen Futterbestandteile, vorliegend Rindfleisch und Rinderpansen, mit einem Fleischwolf auf eine Größe von 10 mm zerkleinert. Tierische Futterbestandteile wie Rinderknochen werden auf eine Größe von 5 mm gebracht. Selbstverständlich können die tierischen Futterbestandteile auch auf eine andere Größe gebracht werden und/oder andere tierische Futterbestandteile verwendet werden.

Die im Verfahrensschritt f) zerkleinerten tierischen Futterbestandteile werden im Verfahrensschritt g) mit den fermentierten pflanzlichen Futterbestandteilen, Kokosöl, Sonnenblumenöl und Fischöl zu einer Tierfuttergrundmasse vermengt.

Die Tierfuttergrundmasse wird anschließend mittels einer Portionieranlage in Beutel zu 200 g abgefüllt (Verfahrensschritt h)). Es können aber auch Beutel mit 250 g, 300 g, 400 g, 500 g oder einem anderen Gewicht hergestellt werden. Auch kann die Tierfutterrohmasse anstatt in Beuteln in Darm oder einem anderen Behältnis verpackt werden.

Die abgepackte Tierfuttergrundmasse wird in Verfahrensschritt i) entweder direkt eingefroren oder vor dem Einfrieren gegart. Das Garen erfolgt vorteilhafterweise bei einer Temperatur zwischen 72 °C und 80 °C bis zur Erreichung des Garpunktes. Ebenso kann die Haltbarkeit des abgepackten Tierfutters auch anders, wie beispielsweise durch Trocknen, verlängert werden, beispielsweise durch Abhängen.

In einer alternativen Ausführungsform des Verfahrens können die Verfahrensschritte h) und/oder i) auch weggelassen werden.

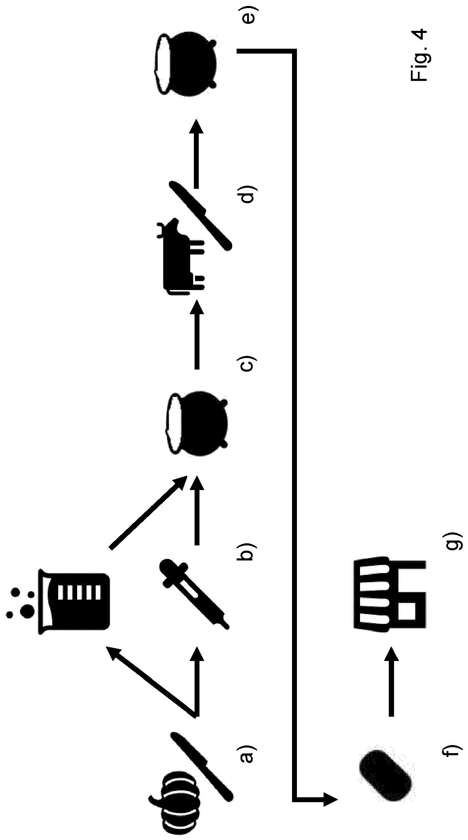

Figur 4 zeigt schematisch Verfahrensschritte einer weiteren Ausführungsform eines Verfahrens zum Herstellen von Tierfutter.

Bei dieser Ausführungsform des Verfahrens werden im Verfahrensschritt a) die pflanzlichen Futterbestandteile zerkleinert. Anschließend wird ein Teil der zerkleinerten pflanzlichen Futterbestandteile in einem Fermentierprozess fermentiert und der verbleibende Teil der pflanzlichen Futterbestandteile im Niedrigtemperaturbereich gegart (Verfahrensschritt b)). Die Fermentierung wird vorliegend auf natürlichem Wege, d.h. ohne die Zugabe von Mikroorganismen, wie Bakterien, Hefe, Schimmel, Zellkulturen oder Enzyme, ausgelöst. Alternativ können zum Starten und Kontrollieren des Fermentierprozess den zu fermentierenden pflanzlichen Futterbestandteilen jedoch auch Mikroorganismen beigefügt werden.

Im Verfahrensschritt c) werden die fermentierten pflanzlichen Futterbestandteile und die gegarten pflanzlichen Futterbestandteile miteinander vermischt. Die vermischten pflanzlichen Futterbestandteile werden im Verfahrensschritt e) mit im Verfahrensschritt c) zerkleinertem Pansen und zerkleinerten von wenigstens einem warmblütigen Schlachttier und/oder Geflügel und/oder Fisch stammenden tierischen Futterbestandteilen vermengt. Hierbei wird der Fermentierprozess der pflanzlichen Futterbestandteile durch die Zugabe des Pansens aufrechterhalten. Durch die in dem Pansen erhaltenen Milchsäurebakterien kann der Fermentierprozess fortgeführt werden, wodurch ein besonders gut verdauliches Tierfutter bereitgestellt werden kann.

Die ausgebildete Tierfuttergrundmasse wird mittels einer Portionieranlage im Verfahrensschritt f) portionsweise in Beutel abgepackt. Die die Tierfuttergrundmasse enthaltenden Beutel werden im Verfahrensschritt g) eingefroren. Mit dem Einfrieren der Tierfuttergrundmasse wird der Fermentierprozess verlangsamt bzw. gestoppt. Sobald die Tierfuttergrundmasse wieder aufgetaut ist, setzt der Fermentierprozess wieder ein und die pflanzlichen Futterbestandteile fermentieren in dem Portionsbeutel weiter, wodurch sich Probiotika ausbilden, die die Tierfuttergrundmasse besonders gesund und verträglich machen.

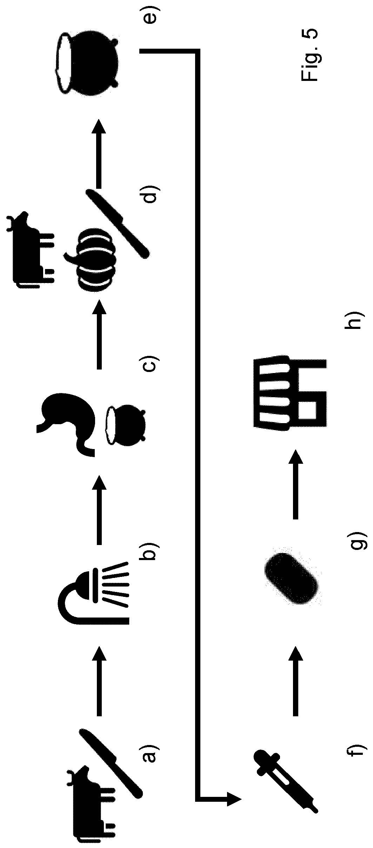

Figur 5 zeigt schematisch Verfahrensschritte einer weiteren Ausführungsform eines Verfahrens zum Herstellen von Tierfutter.

Im Verfahrensschritt a) dieser Ausführungsform des Verfahrens wird frischer, grüner Pansen aufgeschnitten und dessen Inhalt entfernt. Der aufgeschnittene Pansen wird im Verfahrensschritt b) zum Spülen in Wasser getaucht und anschließend zum Abtropfen aufgehängt (Verfahrensschritt c)). Beim Spülen des Pansens werden beispielsweise Steine, Schwermetalle und andere unverträgliche Materialien von dem Pansen abgewaschen.

Der von dem abgehängten Pansen abtropfende Magensaft wird aufgefangen und zu einem späteren Zeitpunkt der Tierfuttergrundmasse zugegeben.

Während des Abtropfens des Pansens oder im Anschluss an den Abtropfprozess werden pflanzliche Futterbestandteile und weitere tierische Futterbestandteile zerkleinert.

Als weitere tierische Futterbestandteile werden tierische Futterbestandteile von wenigstens einem warmblütigen Schlachttier und/oder Geflügel und/oder Fisch verwendet. Beispielsweise können hier Muskelfleisch und/oder Innereien eines warmblütigen Schlachttieres, Geflügel oder Fisches verwendet werden. Tierische Futterbestandteile sind Gemüse, wie Kürbis oder Karotten, und Früchte, wie Äpfel. Bei der vorliegenden Ausführungsform werden sowohl rohe tierische Futterbestandteile als auch rohe pflanzliche Futterbestandteile verwendet. In weiteren Ausführungsformen des Verfahrens zum Herstellen von Tierfutter können jedoch auch gegarte und/oder fermentierte pflanzliche Futterbestandteile und/oder gegarten tierische Futterbestandteile verwendet werden.

Im Verfahrensschritt e) werden die zerkleinerten pflanzlichen Futterbestandteile und die zerkleinerten tierischen Futterbestandteile mit dem abgetropften, ebenfalls in Verfahrensschritt d) zerkleinerten Pansen unter Ausbildung einer Tierfuttergrundmasse vermischt. Durch die Zugabe des Pansens zu den pflanzlichen Futterbestandteilen wird der Fementierprozess in Gang gesetzt. Dies erfolgt durch die in dem Pansen enthaltenen Milchsäurebakterien.

In regelmäßigen Abständen wird der Tierfuttergrundmasse mehrfach der durch das Abtropfen des Pansens gewonnene Magensaft zugegeben (Verfahrensschritt f)). Durch die kontinuierliche Zugabe von Magensaft zu den pflanzlichen Futterbestandteilen kann der Fermentierprozess beschleunigt werden und gleichzeitig ein gutes Fermentierergebnis erzielt werden. Es kann so sehr effektiv ein sehr gut verträgliches Tierfutter hergestellt werden.

Die fermentierte Tierfuttergrundmasse wird anschließend im Verfahrensschritt g) portionsweise verpackt und eingefroren (Verfahrensschritt h)). Alternativ kann die fertige Tierfuttergrundmasse auch geräuchert, gekocht, gedämpft, gebrüht, pasteurisiert oder getrocknet werden.

## Patentansprüche

1. Verfahren zum Herstellen von Tierfutter, bei dem pflanzliche Futterbestandteile in einem Fermentierprozess fermentiert werden, **dadurch gekennzeichnet, dass** entweder
a) wenigstens Teile der pflanzlichen Futterbestandteile vor dem Fermentierprozess in einem Garprozess bei einer Temperatur von 72°C bis 80°C gegart werden, aus Pansen Magensaft gewonnen wird, indem grüner Pansen aufgeschnitten wird, mit Wasser gespült wird und zum Abtropfen aufgehangen wird, wobei von dem Pansen abtropfender Magensaft aufgefangen wird, der Magensaft den pflanzlichen Futterbestandteilen zur Unterstützung des Fermentierprozesses der pflanzlichen Futterbestandteile zugegeben wird, und die fermentierten und zumindest teilweise gegarten pflanzlichen Futterbestandteile wenigstens mit von wenigstens einem warmblütigen Schlachttier und/oder Geflügel und/oder Fisch stammenden tierischen Futterbestandteilen unter Ausbildung einer Tierfuttergrundmasse vermischt werden, oder
b) ein Teil der pflanzlichen Futterbestandteile in einem Fermentierprozess fermentiert wird und ein weiterer Teil der pflanzlichen Futterbestandteile in einem Garprozess bei einer Temperatur zwischen 72°C und 80°C gegart wird, die fermentierten pflanzlichen Futterbestandteile und die gegarten pflanzlichen Futterbestandteile miteinander vermischt werden, aus Pansen Magensaft gewonnen wird, indem grüner Pansen aufgeschnitten wird, mit Wasser gespült wird und zum Abtropfen aufgehangen wird, wobei von dem Pansen abtropfender Magensaft aufgefangen wird, der Magensaft den pflanzlichen Futterbestandteilen zugegeben wird, die miteinander vermischten pflanzlichen Futterbestandteile weiterfermentiert werden und wenigstens mit Pansen und von wenigstens einem warmblütigen Schlachttier und/oder Geflügel und/oder Fisch stammenden tierischen Futterbestandteilen unter Ausbildung einer Tierfuttergrundmasse vermischt werden.

2. Verfahren nach dem vorhergehenden Anspruch, **dadurch gekennzeichnet, dass** in Ausführungsform a) als pflanzliche Futterbestandteile Gemüse, Früchte, Getreideprodukte und/oder Salat verwendet werden, wobei die pflanzlichen Futterbestandteile vor dem Garprozess zerkleinert werden, und nach dem Zerkleinerungsprozess und vor dem Garprozess flüssige und feste pflanzliche Futterbestandteile voneinander getrennt werden.

3. Verfahren nach Anspruch 2, **dadurch gekennzeichnet, dass** in dem Garprozess nur die festen pflanzlichen Futterbestandteile gegart werden.

4. Verfahren nach Anspruch 3, **dadurch gekennzeichnet, dass** die gegarten festen pflanzlichen Futterbestandteile und die flüssigen pflanzlichen Futterbestandteile bei einer Temperatur von 30°C bis 38°C miteinander vermischt werden.

5. Verfahren nach wenigstens einem der vorhergehenden Ansprüche, **dadurch gekennzeichnet, dass** den pflanzlichen Futterbestandteilen Milchsäurebakterien und/oder Bierhefe zugegeben werden.

6. Verfahren nach wenigstens einem der vorhergehenden Ansprüche, **dadurch gekennzeichnet, dass** der Fermentierprozess in einem geschlossenen Behälter durchgeführt wird.

7. Verfahren nach wenigstens einem der vorhergehenden Ansprüche, **dadurch gekennzeichnet, dass** der Fermentierprozess im Vakuum durchgeführt wird.

8. Verfahren nach einem der vorhergehenden Ansprüche, **dadurch gekennzeichnet, dass** als pflanzliche Futterbestandteile Gemüse, Früchte, Getreideprodukte und/oder Salat verwendet werden.

9. Verfahren nach wenigstens einem der vorhergehenden Ansprüche, **dadurch gekennzeichnet, dass** als von wenigstens einem warmblütigen Schlachttier stammende tierische Futterbestandteile Muskelfleisch, Fett, Knochen, Innereien, Blut, Haut, Flechsen und/oder Gelatine verwendet werden.

10. Verfahren nach wenigstens einem der vorhergehenden Ansprüche, **dadurch gekennzeichnet, dass** der Tierfuttergrundmasse Öl, Milchprodukte und/oder Eier beigemischt werden.

11. Verfahren nach wenigstens einem der vorhergehenden Ansprüche, **dadurch gekennzeichnet, dass** die Tierfuttergrundmasse in einem Naturdarm verpackt wird.

12. Verfahren nach wenigstens einem der vorhergehenden Ansprüche, **dadurch gekennzeichnet, dass** die Tierfuttergrundmasse gebrüht, gekocht, gedämpft, pasteurisiert, geräuchert, getrocknet und/oder eingefroren wird.

13. Verfahren zum Herstellen von Tiertrockenfutter und/oder Tierfuttersnacks unter Verwendung eines Verfahrens zur Herstellung von Tierfutter nach wenigstens einem der Ansprüche 1 bis 10, **dadurch gekennzeichnet, dass** die Tierfuttergrundmasse wenigstens mit Getreideflocken unter Ausbildung einer Tierfuttermasse vermischt wird, die gebacken und/oder getrocknet wird.

## Claims

1. Method for producing animal feed, in which plant feed components are fermented in a fermentation process, **characterized in that** either
a) at least parts of the plant feed components are cooked in a cooking process at a temperature of 72°C to 80°C before the fermentation process, gastric juice is obtained from rumen by slicing green rumen, rinsing it with water and hanging it up for drip off, wherein gastric juice dripping off from the rumen is collected, the gastric juice is added to the plant feed components for supporting the fermentation process of the plant feed components, and the fermented and at least partially cooked plant feed components are mixed with at least animal feed components originating from at least one warm-blooded slaughtered animal and/or poultry and/or fish to form an animal feed base mass, or
b) a portion of the plant feed components is fermented in a fermentation process and a further portion of the plant feed components is cooked in a cooking process at a temperature between 72°C and 80°C, the fermented plant feed components and the cooked plant feed components are mixed together, gastric juice is obtained from rumen by slicing green rumen, rinsing it with water and hanging it up for drip off, wherein gastric juice dripping off from the rumen is collected, the gastric juice is added to the plant feed components, the plant feed components mixed together are further fermented and mixed at least with rumen and animal feed components originating from at least one warm-blooded slaughtered animal and/or poultry and/or fish to form an animal feed base mass.

2. Method according to the preceding claim, **characterized in that** in embodiment a) vegetables, fruits, cereal products and/or salad are used as plant feed components, wherein the plant feed components are chopped before the cooking process, and after the chopping process and before the cooking process liquid and solid plant feed components are separated from one another.

3. Method according to claim 2, **characterized in that** in the cooking process only the solid vegetable feed components are cooked.

4. Method according to claim 3, **characterized in that** the cooked solid plant feed components and the liquid plant feed components are mixed together at a temperature of 30°C to 38°C.

5. Method according to at least one of the preceding claims, **characterized in that** lactic acid bacteria and/or brewer's yeast are added to the plant feed components.

6. Method according to at least one of the preceding claims, **characterized in that** the fermentation process is carried out in a closed container.

7. Method according to at least one of the preceding claims, **characterized in that** the fermentation process is carried out in vacuum.

8. Method according to one of the preceding claims, **characterized in that** vegetables, fruits, cereal products and/or salad are used as plant feed components.

9. Method according to at least one of the preceding claims, **characterized in that** muscle meat, fat, bones, offal, blood, skin, tendons and/or gelatine are used as animal feed components originating from at least one warm-blooded slaughtered animal.

10. Method according to at least one of the preceding claims, **characterized in that** oil, milk products and/or eggs are added to the animal feed base mass.

11. Method according to at least one of the preceding claims, **characterized in that** the animal feed base mass is packaged in a natural casing.

12. Method according to at least one of the preceding claims, **characterized in that** the animal feed base mass is scalded, cooked, steamed, pasteurized, smoked, dried and/or frozen.

13. Method for producing dry animal feed and/or animal feed snacks using a method for producing animal feed according to at least one of claims 1 to 10, **characterized in that** the animal feed base mass is mixed at least with cereal flakes to form an animal feed mass which is baked and/or dried.

## Revendications

1. Procédé de production d'aliments pour animaux, dans lequel des composants alimentaires végétaux sont fermentés dans un processus de fermentation, **caractérisé en ce que** soit
a) au moins certaines parties des composants alimentaires végétaux sont cuites dans un processus de cuisson à une température de 72°C à 80°C avant le processus de fermentation, du suc gastrique est obtenu de rumen par découper du rumen vert, le rincer avec de l'eau et le suspendre pour le faire égoutter, du suc gastrique égouttant du rumen étant recueillit, le suc gastrique étant ajouté aux composants alimentaires végétaux pour supporter le processus de fermentation des composants alimentaires végétaux, et les composants alimentaires végétaux fermentés et au moins partiellement cuits sont mélangés avec au moins des composants alimentaires animaux provenant d'au moins un animal à sang chaud abattu et/ou de volaille et/ou de poisson pour former un appareil d'aliment pour animaux, ou
b) une partie des composants alimentaires végétaux est fermentée dans un processus de fermentation et une autre partie des composants alimentaires végétaux est cuite dans un processus de cuisson à une température entre 72°C et 80°C, les composants alimentaires végétaux fermentés et les composants alimentaires végétaux cuits sont mélangés ensemble, du suc gastrique est obtenu de rumen par découper du rumen vert, le rincer avec de l'eau et le suspendre pour le faire égoutter, du suc gastrique égouttant du rumen étant recueillit, le suc gastrique étant ajouté aux composants alimentaires végétaux, les composants alimentaires végétaux mélangés ensemble sont à nouveau fermentés et mélangés au moins avec du rumen et des composants alimentaires animaux provenant d'au moins un animal à sang chaud abattu et/ou de volaille et/ou de poisson pour former un appareil d'aliment pour animaux.

2. Procédé selon la revendication précédente, **caractérisé en ce que** dans le mode de réalisation a) des légumes, des fruits, des produits céréaliers et/ou de la salade sont utilisés comme des composants alimentaires végétaux, les composants alimentaires végétaux sont broyés avant le processus de cuisson, et après le processus de broyage et avant le processus de cuisson les composants alimentaires végétaux liquides et solides sont séparés les uns des autres.

3. Procédé selon la revendication 2, **caractérisé en ce que** lors du processus de cuisson, seuls les composants alimentaires végétaux solides sont cuits.

4. Procédé selon la revendication 3, **caractérisé en ce que** les composants alimentaires végétaux solides cuits et les composants alimentaires végétaux liquides sont mélangés ensemble à une température de 30°C à 38°C.

5. Procédé selon au moins l'une des revendications précédentes, **caractérisé en ce que** des bactéries lactiques et/ou de la levure de bière sont ajoutées aux composants alimentaires végétaux.

6. Procédé selon au moins l'une des revendications précédentes, **caractérisé en ce que** le processus de fermentation est réalisé dans un récipient fermé.

7. Procédé selon au moins l'une des revendications précédentes, **caractérisé en ce que** le processus de fermentation est réalisé sous vide.

8. Procédé selon l'une des revendications précédentes, **caractérisé en ce que** l'on utilise comme composants alimentaires végétaux des légumes, des fruits, des produits céréaliers et/ou de la salade.

9. Procédé selon au moins l'une des revendications précédentes, **caractérisé en ce que** l'on utilise comme composants alimentaires animaux de la viande musculaire, de la graisse, des os, des abats, du sang, de la peau, des tendons et/ou de la gélatine provenant d'au moins un animal à sang chaud abattu.

10. Procédé selon au moins l'une des revendications précédentes, **caractérisé en ce que** de l'huile, des produits laitiers et/ou des œufs sont ajoutés à l'appareil d'aliment pour animaux.

11. Procédé selon au moins l'une des revendications précédentes, **caractérisé en ce que** l'appareil d'aliment pour animaux est conditionné dans une enveloppe naturelle.

12. Procédé selon au moins l'une des revendications précédentes, **caractérisé en ce que** l'appareil d'aliment pour animaux est échaudé, cuit, cuit à la vapeur, pasteurisé, fumé, séché et/ou congelé.

13. Procédé de production d'aliments secs pour animaux et/ou de snacks alimentaires pour animaux utilisant un procédé de production d'aliments pour animaux selon au moins l'une des revendications 1 à 10, **caractérisé en ce que** l'appareil d'aliment pour animaux est mélangé au moins avec des flocons de céréales pour former une masse d'aliments pour animaux qui est cuite et/ou séchée.
